# EUROPÄISCHE PATENTSCHRIFT

(11) **EP 3 185 733 B1**
(45) Veröffentlichungstag und Bekanntmachung des Hinweises auf die Patenterteilung: **31.10.2018**
(21) Anmeldenummer: 15751023.1
(22) Anmeldetag: 20.08.2015
(51) Int. Cl.: A47J 43/07

(54) **BEARBEITUNGSGEFÄSS MIT DECKEL UND SICHERHEITSKUPPLUNG**
PROCESSING VESSEL HAVING A COVER AND A SAFETY COUPLING
RÉCIPIENT DE PRÉPARATION MUNI D'UN COUVERCLE ET D'UN RACCORDEMENT DE SÉCURITÉ

(30) Priorität: 28.08.2014 DE 102014217244
(43) Veröffentlichungstag der Anmeldung: 05.07.2017
(73) Patentinhaber: BSH Hausgeräte GmbH, 81739 München (DE)
(72) Erfinder: KOVACIC, Peter, 3303 Gomilsko (SI); ZLAUS, Uros, 3201 Smartno v Rozni dolini (SI); SEMEJA, Uros, 3327 Smartno ob Paki (SI); IVANUSIC, Marko, 8340 Crnomelj (SI)
(86) Internationale Anmeldenummer: PCT/EP2015/069105
(87) Internationale Veröffentlichungsnummer: WO 2016/030261

(56) Entgegenhaltungen:
- EP-A1- 1 391 172
- DE-B- 1 179 674
- DE-U1-202012 103 202

## Beschreibung

### Gebiet der Erfindung

Die Erfindung betrifft einen Deckel, der an ein Gefäß für die Bearbeitung eines in dem Gefäß vorliegenden Lebensmittels lösbar anbringbar ist und der die Bewegung eines Werkzeugantriebs auf ein Bearbeitungswerkzeug für die Bearbeitung des Lebensmittels in dem Gefäß übertragen kann. Weiter betrifft die Erfindung ein Küchengerät, das einen solchen Deckel umfasst.

### Hintergrund der Erfindung

Küchenmaschinen weisen zum Antrieb üblicherweise einen in die Küchenmaschine integrierten Motor und eine Leistungsübertragungseinrichtung zum Übertragen der Motorleistung auf ein Bearbeitungswerkzeug, mit dem ein in einem Gefäß vorliegendes Lebensmittel bearbeitet werden kann, auf. Bei einigen Küchenmaschinen ist der Motor lösbar an der Küchenmaschine anbringbar, zum Beispiel in Form eines lösbar anbringbaren Handrührers oder Mixstabs zum Antreiben des Bearbeitungswerkzeugs der Küchenmaschine. Sowohl Küchenmaschinen mit integrierten Motor als auch Küchenmaschinen mit lösbar-anbringbaren Motor kommen sowohl als "L"-Typ-Küchenmaschinen, bei denen der Motor neben dem Gefäß angeordnet ist, als auch als "I"-Typ-Küchenmaschinen, bei dem der Motor über oder unter dem Gefäß angeordnet ist, vor.

Aus der Gebrauchsmusterschrift DE 20 2012 103 202 U1 ist eine Küchenmaschine mit einem Deckel, einem Behälter, einer Lebensmittelverarbeitungswerkzeugeinheit und einer Antriebseinheit bekannt. Der Deckel weist einerseits ein Befestigungselement zum lösbaren Befestigen des Deckels an dem Behälter und andererseits eine Antriebseinheitshalterung zum lösbaren Befestigen der Antriebseinheit an dem Deckel auf. Eine Leistungsübertragungseinrichtung des Deckels überträgt die Leistung der Antriebseinheit auf die Lebensmittelverarbeitungswerkzeugeinheit. Weiterhin ist ein Verriegelungselement an dem Deckel vorgesehen, das mit dem an dem Deckel angebrachten Behälter in Eingriff kommt, wenn die Antriebseinheit an dem Deckel befestigt wird, sodass ein Loslösen des Deckels von dem Behälter durch das Verriegelungselement verhindert wird, wenn die Antriebseinheit an dem Deckel angebracht ist.

Zum Betrieb der in der Gebrauchsmusterschrift DE 20 2012 103 202 U1 offenbarten Küchenmaschine muss zunächst die Lebensmittelverarbeitungswerkzeugeinheit, die in einem Ausführungsbeispiel eine Würfelschneideinheit mit einer Bodenplatte und einem rotierenden Messer ist, in das Gefäß eingesetzt und darin befestigt werden. Anschließend muss der Deckel mit der Leistungsübertragungseinrichtung auf den Behälter aufgesetzt und befestigt werden. Nun kann die Antriebseinheit an dem Deckel befestigt werden. Um einen sicheren Betrieb der Küchenmaschine zu gewährleisten verhindert der Verriegelungsmechanismus, dass der Deckel bei noch angebrachter Antriebseinheit von dem Behälter gelöst wird.

Ein Nachteil der aus der Gebrauchsmusterschrift DE 20 2012 103 202 U1 bekannten Küchenmaschine kann sein, dass ein Benutzer zur Entnahme des in der Küchenmaschine bearbeiteten Lebensmittels zunächst die Antriebseinheit entfernen muss, um das Verriegelungselement zu betätigen, das bei angebrachter Antriebseinheit ein Lösen des Deckels vom Behälter verhindert. Weiter kann es erforderlich sein, dass der Benutzer sorgfältig darauf achten, welchen Teile er voneinander entfernt, die Lebensmittelverarbeitungswerkzeugeinheit mit dem Deckel von dem Behälter oder den Deckel von der Lebensmittelverarbeitungswerkzeugeinheit. Wenn er nämlich die Lebensmittelverarbeitungswerkzeugeinheit von dem Deckel trennt, muss sie bei der nächsten Benutzung zunächst wieder angebracht werden, was weiteren Arbeitsaufwand nach sich zieht.

Ähnlich zur Gebrauchsmusterschrift DE 20 2012 103 202 U1 offenbart auch die Offenlegungsschrift DE 102 44 717 A1 ein Haushaltsgerät mit einer Schüssel, einem in der Schüssel befindlichen drehbaren Werkzeug, einem Deckel zum Verschließen der Öffnung der Schüssel und eine Antriebseinheit, die auf dem Deckel aufsetzbar ist und mit der das Werkzeug antreibbar ist.

Aus der Patentschrift DE 44 14 415 C1 ist ein Zusatzgerät für einen elektrisch betriebenen Handrührer bekannt. Das Zusatzgerät weist mindestens zwei Antriebswellen auf, an die Arbeitswerkzeuge lösbar angebracht werden können. Die Antriebswellen können durch Aufsetzen des Handrührers auf einen Deckel des Zusatzgeräts angetrieben werden. Über die Antriebswellen können Werkzeuge im Inneren des Behälters zum Zweck des Zerkleinerns von Nahrungsmitteln in Betrieb gesetzt werden.

Die europäische Offenlegungsschrift EP 1 391172 A1 offenbart eine Vorrichtung zur Lebensmittelzubereitung, die einen Arbeitsbehälter mit einem Deckel und einem Gehäuse, das über dem Arbeitsbehälter angeordnet ist, aufweist. In dem Gehäuse befindet sich ein Motor mit einem Schalter zum Ein- und Ausschalten des Motors. Über zwei korrespondierende Detektionselemente kann der Schalter abhängig davon, ob das Gehäuse auf den Arbeitsbehälter aufgesetzt ist oder nicht, ein- oder ausgeschaltet werden.

Aus der Auslegungsschrift DE 1 179 674 A1 ist ein Haushaltsgerät mit rotierendem Arbeitswerkzeug, das von unten durch einen Motor angetrieben wird, bekannt. Die Wellen von Motor und Arbeitswerkzeug sind durch eine Kupplung getrennt. Ein Deckel ist an das Gerät angelenkt und somit der Kupplung funktionsverbunden, dass die Kupplung bei geschlossenem Deckel die Welle des Motors drehfest mit der Welle des Werkzeugs verbindet.

Schließlich ist eine "L"-Typ-Küchenmaschine des Herstellers Philips bekannt, bei der zum Antrieb ein integrierter Elektromotor vertikal angeordnet ist und mit dem oberen Ende der Motorwelle einen Mixer antreibt. Das untere Ende der Motorwelle treibt eine Riemenscheibe an, die über einen Zahnriemen eine Werkzeugwelle der Küchenmaschine antreibt. Die Riemenscheibe weist eine lösbare Kupplung auf, die durch einen Schalthebel betätigbar ist. Wenn der Mixer auf der Küchenmaschine befestigt wird, wird dadurch die Kupplung mittels einer Betätigungsstange gelöst, sodass der Antrieb von der Werkzeugwelle entkoppelt ist und der Motor nur noch den Mixer antreibt. Dies soll einen ruhigen und gleichmäßigen Lauf der Küchenmaschine bei Benutzung des Mixers ermöglichen.

### Der Erfindung zugrundeliegende Aufgabe

Der Erfindung liegt die Aufgabe zugrunde, ein verbesserten Deckel von dem Typ, der an ein Gefäß für die Bearbeitung eines in dem Gefäß vorliegenden Lebensmittel lösbar anbringbar ist und der die Bewegung eines Werkzeugantriebs auf ein Bearbeitungswerkzeug für die Bearbeitung des Lebensmittels in dem Gefäß übertragen kann, bereit zu stellen. Weiterhin liegt der Erfindung die Aufgabe zugrunde, ein verbessertes Küchengerät mit einem solchen Deckel bereitzustellen.

Durch die Erfindung sollen Nachteile bekannter Deckel und Küchengeräte überwunden werden. Insbesondere soll ein sicherer Betrieb gewährleistet werden, ohne dass Teile, insbesondere ein Werkzeugantrieb, von dem Deckel entfernt werden müssen. Auch soll es durch die Erfindung erreichbar sein, auf Mittel zum Bremsen einer Rotation eines Werkzeugantriebs oder eines Werkzeuges zu verzichten.

### Erfindungsgemäße Lösung

Die Bezugszeichen in sämtlichen Ansprüchen haben keine einschränkende Wirkung, sondern sollen lediglich deren Lesbarkeit verbessern.

Zum Lösen der Aufgabe lehrt die Erfindung einen Deckel gemäß Anspruch 1 und ein Küchengerät nach Anspruch 11. Der Deckel ist an ein Gefäß für die Bearbeitung eines in dem Gefäß vorliegenden Lebensmittels lösbar anbringbar und kann die Bewegung eines Werkzeugantriebs auf ein Bearbeitungswerkzeug für die Bearbeitung des Lebensmittels in dem Gefäß übertragen. Außerdem weist der Deckel eine lösbare Sicherheitskupplung auf, um die Bewegung des Werkzeugantriebs auf das Werkzeug im geschlossenen Zustand zu übertragen und im gelösten Zustand diese Übertragung zu unterbrechen. Hierbei kann der Deckel entweder direkt an das Gefäß anbringbar sein oder indirekt über ein Zwischenelement, zum Beispiel einen Adapter. "Lösen" der Sicherheitskupplung bedeutet im Zusammenhang mit der vorliegenden Erfindung, dass die Wirkverbindung zwischen Werkzeugantrieb und Bearbeitungswerkzeug unterbrochen wird.

Der Deckel weist einen Kupplungsschalter auf, der die Sicherheitskupplung abhängig von der Verbindung zwischen dem Deckel und dem Gefäß schließen und lösen kann. Mit der Erfindung kann vorteilhafterweise erreicht werden, dass die Kupplung sich dann in einem gelösten Zustand befindet, wenn das Werkzeug durch Lösen oder Trennen des Deckels von dem Gefäß von außen zugänglich wird. Insbesondere ist erreichbar, dass die Antriebseinheit bei Öffnung des Deckels mit diesem verbunden bleiben kann, ohne dass eine Gefahr von dem Werkzeug ausgeht. Die Sicherheitskupplung kann so vorteilhafterweise verhindern, dass das Werkzeug bei geöffnetem Deckel angetrieben wird.

Weiterhin wird die Aufgabe durch ein Küchengerät gelöst, das einen solchen Deckel und ein Gefäß für die Bearbeitung eines in dem Gefäß vorliegenden Lebensmittels, an dem der Deckel lösbar angebracht werden kann, umfasst. Das Küchengerät ist vorzugsweise eine Küchenmaschine, besonders vorzugsweise eine Standküchenmaschine, zum Beispiel vom "I"-Typ oder vom "L"-Typ.

Es ist ein erreichbarer Vorteil der Erfindung, dass die Sicherheit der Bearbeitung des Lebensmittels in dem Gefäß mittels des Bearbeitungswerkzeugs verbessert werden kann. Dadurch, dass die Sicherheitskupplung im gelösten Zustand die Übertragung der Bewegung des Werkzeugantriebs auf das Werkzeug unterbrechen kann, kann vermieden werden, dass zum Anhalten der Bewegung des Bearbeitungswerkzeugs zunächst der Werkzeugantrieb vom Deckel gelöst werden muss. Auch ist vorteilhaft erreichbar, dass das Werkzeug schnell zum Stehen gebracht werden kann. Insbesondere ist es mit der Erfindung möglich, dass keine Bremsmittel erforderlich sind, um den Antrieb abzubremsen. Vielmehr lässt sich erreichen, dass das Bearbeitungswerkzeug bereits zum Stehen kommt, wenn der Werkzeugantrieb noch ausläuft.

### Bevorzugte Ausgestaltung der Erfindung

Vorteilhafte Aus- und Weiterbildungen, welche einzeln oder in Kombination miteinander eingesetzt werden können, sind Gegenstand der abhängigen Ansprüche.

Vorzugsweise stehen der Kupplungsschalter und die Sicherheitskupplung in der Weise miteinander in Verbindung, dass eine Drehung des Kupplungsschalters eine translatorische Bewegung eines Teils der Sicherheitskupplung bewirkt.

Der bevorzugte Kupplungsschalter weist eine "Gelöst"-Stellung auf, in der sich die Sicherheitskupplung in dem gelösten Zustand befindet, indem die Übertragung der Bewegung des Werkzeugantriebs auf das Bearbeitungswerkzeug unterbrochen ist, und eine davon verschiedene "Geschlossen"-Stellung, in der sich die Sicherheitskupplung in ihrem geschlossenen Zustand befindet, in dem die Bewegung des Werkzeugantriebes auf das Bearbeitungswerkzeug übertragen durch die Sicherheitskupplung übertragen wird.

"Verbindung" im Sinne der vorliegenden Erfindungsbeschreibung bedeutet, ob oder wie der Deckel mit dem Gefäß verbunden ist. Zum Beispiel kann die Kupplung in dem auf das Gefäß aufgesetzten Zustand des Deckels geschlossen und in dem von dem Gefäß getrennten Zustand des Deckels gelöst sein. In einer bevorzugten Ausführung der Erfindung ist der Deckel an dem Gefäß befestigbar. Vorzugsweise kann die Kupplung in diesem Fall in dem an dem Gefäß befestigten Zustand des Deckels geschlossen und in dem an dem Gefäß unbefestigten Zustand des Deckels gelöst sein.

Der bevorzugte Kupplungsschalter ist als Hebel ausgebildet, besonders vorzugsweise als Drehhebel. In dieser Ausführung der Erfindung kann der Kupplungsschalter durch Drehen eines Hebelarms des Drehhebels zwischen der "Gelöst"- Stellung und der "Geschlossen"-Stellung hin- und herbewegt werden. Ein bevorzugter Kupplungsschalter ist gabelförmig in dem Sinne, dass er eine Aussparung aufweist, ausgeführt. Die bevorzugte Aussparung ist im Wesentlichen U-förmig ausgebildet. Die Aussparung befindet sich bei dem Drehhebel vorzugsweise am vom Drehpunkt des Drehhebels entfernten Ende des Hebelarms.

Der bevorzugte Kupplungsschalter wirkt mit einem an dem Gefäß angeordneten Betätigungselement zusammen. Alternativ wirkt der Kupplungsschalter mit einem an dem Verbindungselement zwischen Deckel und Gefäß angebrachten Betätigungselement zusammen. Das bevorzugte Betätigungselement kann in die Aussparung des Kupplungsschalters eingreifen. Der bevorzugte Kupplungsschalter ist so ausgebildet, dass er durch ein Drehen des Deckels relativ zum Gefäß betätigbar ist, insbesondere von der "Gelöst" in die "Geschlossen"-Stellung gebracht werden kann.

Das bevorzugte Betätigungselement ist als Vorsprung, besonders vorzugsweise als zylindrischer Vorsprung ausgebildet. Es befindet sich vorzugsweise an einer Außenwand des Gefäßes, besonders vorzugsweise knapp unterhalb des oberen Rands des Gefäßes. Das bevorzugte Betätigungselement kann in die Aussparung des Kupplungsschalters eingreifen, um diesen bei relativer Bewegung, vorzugsweise eine Drehbewegung oder eine schraubenartige Bewegung, von Deckel und Gefäß von der "Gelöst"-Stellung in die "Geschlossen"-Stellung zu bewegen.

Der bevorzugte Deckel weist ein Kupplungsschalterrückstellelement auf, um den Kupplungsschalter bei Nichtbetätigung in die Stellung vorzuspannen, in der die Sicherheitskupplung sich in ihrem gelösten Zustand befindet. Das Rückstellelement kann zum Beispiel eine Feder sein, zum Beispiel eine Schenkelfeder. Mit dieser Ausführung der Erfindung ist vorteilhaft erreichbar, dass der Kupplungsschalter, wenn er nicht mit dem Betätigungselement zusammen wirkt, sich in der "Gelöst"-Stellung befindet, in der die Sicherheitskupplung sich in ihrem gelösten Zustand befindet.

Ein bevorzugter Deckel weist Befestigungsmittel auf, um den Deckel an dem Gefäß lösbar zu befestigen. Weiterhin weist vorzugsweise das Gefäß oder das Zwischenelement zu den Befestigungsmitteln des Deckels korrespondierende Befestigungsmittel auf. Die Befestigungsmittel sind vorzugsweise so ausgebildet, dass der Deckel durch Drehen lösbar an dem Gefäß befestigt werden kann. Besonders vorteilhaft ist erreichbar, dass durch die Drehung sowohl der Deckel an dem Gefäß befestigt als auch die Sicherheitskupplung betätigt wird.

Ein erfindungsgemäßes Befestigungsmittel an dem Deckel kann zum Beispiel ein Gewinde sein, das mit einem Gegengewinde des Gefäßes oder dem Zwischenelement zusammenwirken kann, um den Deckel an dem Gefäß lösbar zu befestigen. Alternativ kann ein erfindungsgemäßes Befestigungsmittel ein Element eines Bajonettverschlusses sein. Der Deckel und das Gefäß oder der Deckel und das Zwischenelement können korrespondierende Elemente eines Bajonettverschlusses aufweisen, um den Deckel an dem Gefäß lösbar zu befestigen.

Der Werkzeugantrieb weist vorzugsweise einen Elektromotor auf. Dieser kann durch ein Stromkabel und/oder durch in dem Werkzeugantrieb vorliegende Batterien versorgbar sein. Besonders vorzugsweise sind die Batterien drahtlos aufladbar. Die Erfindung umfasst aber auch solche Ausführungen, bei denen die Batterien durch ein Kabel aufladbar sind. Der Werkzeugantrieb kann an den Deckel lösbar anbringbar sein. Als lösbarer Werkzeugantrieb kommen zum Beispiel ein Handrührer, ein Handmixer oder eine anderes Küchengerät, z.B. eine Küchenmaschine, in Frage. In einer alternativen Ausführung der Erfindung ist der Werkzeugantrieb unlösbarer Teil des Deckels.

In einer bevorzugten Ausführung der Erfindung weist der Deckel eine Antriebskupplung auf, um den Werkzeugantrieb lösbar an den Deckel anzukuppeln. Die Antriebskupplung kann zum Beispiel eine Zahnkupplung sein. Vorzugsweise ist die Antriebskupplung an einer Antriebswelle angeordnet, die eine Drehbewegung des Werkzeugantriebs direkt oder indirekt, zum Beispiel über ein Getriebe, zu der Sicherheitskupplung weiterleitet.

Ein bevorzugter Deckel weist eine Werkzeugkupplung auf, um das Werkzeug lösbar an den Deckel anzukuppeln. Mit dieser Ausführung der Erfindung kann das Werkzeug vorteilhafterweise an Deckel ankuppelbar, besonders vorzugsweise austauschbar sein. Die Werkzeugkupplung kann zum Beispiel eine Zahnkupplung sein. Vorzugsweise ist die Werkzeugkupplung an einer Abtriebswelle angeordnet, um das Bearbeitungswerkzeug über die Werkzeugkupplung drehend anzutreiben. In einer alternativen Ausführung der Erfindung ist das Bearbeitungswerkzeug unlösbarer Teil des Deckels.

Das bevorzugte Werkzeug dient der mechanischen Verarbeitung von Lebensmitteln, zum Beispiel durch Schneiden, Zerhacken, Würfeln, Zerdrücken, Passieren, Reiben und/oder Raspeln. Ein bevorzugtes Werkzeug hat eine Schneide zum Schneiden von Lebensmitteln. Zum Beispiel kann das Werkzeug mehrere Messer zum Zerhacken oder Schneiden aufweisen. Das Werkzeug kann eine Scheibe mit einem oder mehreren Schneidschlitzen, zum Bespiel zum Schneiden von Gemüsescheiben sein. Ein weiteres geeignetes Werkzeug ist eine Würfelschneideinheit, vorzugsweise eine Würfelschneideinheit von dem Typ, der eine Gitterscheibe aufweist, beispielsweise die aus der Gebrauchsmusterschrift DE 20 2012 103 202 U1 bekannte Würfelschneideinheit. Ein weiteres geeignetes Werkzeug ist eine Reibscheibe. Außerdem kommen ein oder mehrere Knetwerkzeuge oder Rühr- oder Schlagbesen als Werkzeug in Frage.

Ein besonders bevorzugter Deckel weist ein oder mehrere Getriebe auf. In einer Ausführung der Erfindung ist ein Getriebe zwischen Werkzeugantrieb und Sicherheitskupplung, besonders vorzugsweise zwischen Antriebskupplung und Sicherheitskupplung, angebracht. In einer bevorzugten Ausführung des Deckels ist ein Getriebe zwischen Sicherheitskupplung und Werkzeug, besonders vorzugsweise zwischen Sicherheitskupplung und Werkzeugkupplung, angebracht. Es sind auch Ausführungen der Erfindung mit mehreren Getrieben Teil der vorliegenden Erfindung, wobei besonders vorzugsweise ein Getriebe zwischen Werkzeugantrieb und Sicherheitskupplung, besonders vorzugsweise zwischen Antriebskupplung und Sicherheitskupplung, und ein anderes Getriebe zwischen Sicherheitskupplung und Werkzeug, besonders vorzugsweise zwischen Sicherheitskupplung und Werkzeugkupplung, angeordnet ist.

In einer bevorzugten Ausführung der Erfindung ist die Sicherheitskupplung des Deckels formschlüssig. Die bevorzugte Sicherheitskupplung ist eine Zahnkupplung, die mit einer Eingangswelle der Sicherheitskupplung drehfest verbunden ist, und einer Gegenzahnkupplung, die mit einer Ausgangswelle der Sicherheitskupplung drehfest verbunden ist. Vorzugsweise greifen die Zähne der Zahnkupplung und die Zähne der Gegenzahnkupplung greifen im geschlossenen Zustand der Sicherheitskupplung ineinander, um Eingangswelle und Ausgangswelle drehfest miteinander zu verbinden, und im gelösten Zustand der Kupplung nicht ineinander, sodass Eingangs- und Ausgangswelle nicht in Wirkverbindung stehen. Alternativ kann die Sicherheitskupplung auch kraftschlüssig ausgebildet sein.

Vorzugsweise wird die Sicherheitskupplung durch einen Kupplungsschaltarm betätigt, auf den in eine Richtung die Kraft einer Vorspannfeder und in eine andere, vorzugsweise entgegengesetzte Richtung die Kraft einer Kupplungsabschaltfeder wirkt. Die Vorspannfeder wird, vorzugweise indirekt, durch den Kupplungsschalter in der Weise betätigt, dass ihre Kraft auf den Kupplungsschaltarm in der "Geschlossen"-Stellung des Kupplungsschalters größer ist als die Kraft der Kupplungsabschaltfeder, und dadurch die Kraft der Kupplungsabschaltfeder durch die Kraft der Vorspannfeder überwunden wird, sodass der Kupplungsschaltarm die Sicherheitskupplung in den geschlossenen Zustand bringt. Hingegen ist die Kraft der Vorspannfeder auf den Kupplungsschaltarm in der "Gelöst"-Stellung des Kupplungsschalters kleiner als die Kraft der Kupplungsabschaltfeder, sodass die Kupplungsabschaltfeder die Sicherheitskupplung in den gelösten Zustand bringt.

Der bevorzugte Deckel weist eine Einfüllöffnung zum Einfüllen eines Lebensmittels in das Bearbeitungsgefäß auf. Bei dieser Ausführung der Erfindung können vorteilhafterweise in die Einfüllöffnung zugeführte Lebensmittel durch den Deckel in das Gefäß gelangen und dort vom Bearbeitungswerkzeug bearbeitet werden. Von dort fallen Sie vorzugsweise zum Boden des Gefäßes.

Das Gefäß weist allgemein einen Boden und eine um den Boden umlaufende sich nach oben erstreckende Wand auf. Nach obenhin ist das Gefäß offen; durch diese Öffnung kann insbesondere das Lebensmittel in das Gefäß eingefüllt werden. Außerdem kann der der Deckel, eventuell vermittels des Zwischenelements, auf das Gefäß aufgesetzt werden. Das Gefäß kann zum Beispiel eine Rührschüssel oder ein Mixbecher sein. Ein bevorzugtes Gefäß weist einen Griff auf.

### Kurzbeschreibung der Zeichnungen

Eine vorteilhafte Ausgestaltung der Erfindung wird nachfolgend anhand eines in den Zeichnungen dargestellten Ausführungsbeispiels, auf welche die Erfindung jedoch nicht beschränkt ist, näher beschrieben.

Es zeigen schematisch:
- Fig. 1: in perspektivischer Ansicht ein erfindungsgemäßes Küchengerät mit einem Deckel und einem Gefäß sowie den an das Küchengerät anbringbaren Werkzeugantrieb;
- Fig. 2: in perspektivischer Aufrissansicht einen Teil des auf dem Gefäß angebrachten Deckels mit der erfindungsgemäßen Sicherheitskupplung;
- Fig. 3: eine perspektivische Expositionsdarstellung des erfindungsgemäßen Küchengeräts; und
- Fig. 4: in perspektivischer Ansicht der erfindungsgemäße Deckel von unten.

### Detaillierte Beschreibung einer Ausführungsform der Erfindung

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

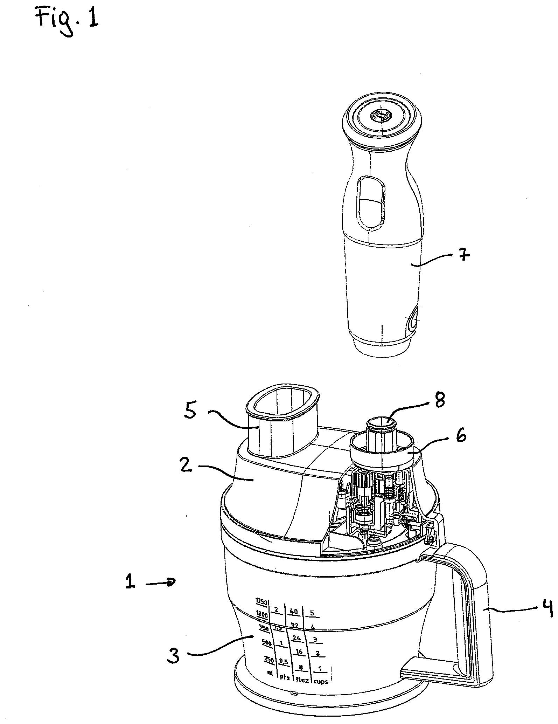

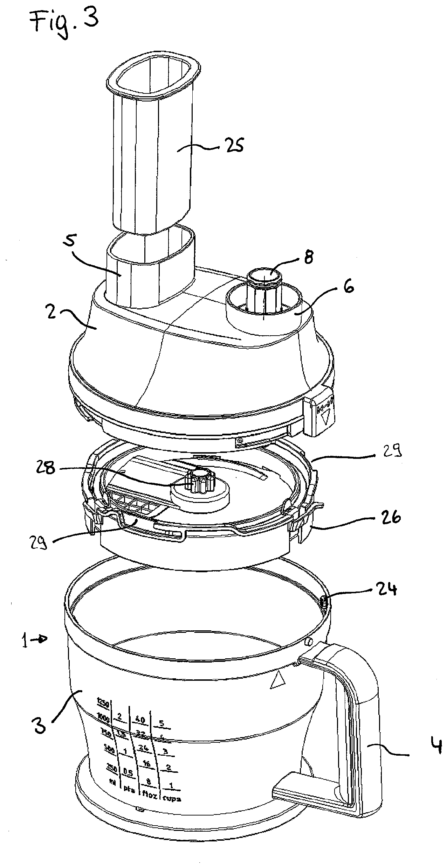

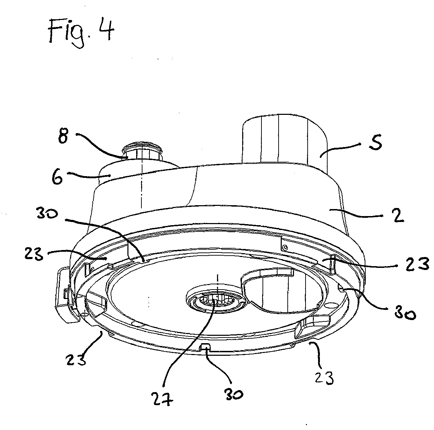

In der Fig. 1 ist ein erfindungsgemäßes Küchengerät 1 offenbart, das einen erfindungsgemäßen Deckel 2 und ein erfindungsgemäßes Gefäß 3 umfasst, wobei der Deckel 2 auf das Gefäß 3 aufgesetzt und an diesem mittels eines Teils 23 eines Bajonettverschlusses (siehe Fig. 4) am Deckel 2 und eines zum Teil 23 des Bajonettverschlusses am Deckel 2 korrespondierenden Teils des Bajonettverschlusses (siehe Fig. 3) am Gefäß 3 befestigt ist. Zumindest die Gefäßwand des Gefäßes 3 besteht aus einem transparenten Kunststoff und ist mit Volumen- und/oder Gewichtsmaßangaben versehen, die es erleichtern, das Gefäß 3 mit der gewünschten Menge eines Lebensmittels zu befüllen. Außerdem ist das Gefäß 3 mit einem Griff 4 zur leichteren Handhabung ausgestattet.

Der Deckel 2 weist auf seiner Außenseite eine Einfüllöffnung 5 zum Einfüllen eines Lebensmittels in das Gefäß 3 auf. Das durch die Einfüllöffnung 5 eingefüllte Lebensmittel gelangt durch den Deckel 2 in das Gefäß 3. Die Einfüllöffnung 5 kann mit einem Einfüllöffnungsdeckel 25 verschlossen werden. Weiterhin ist der Deckel 2 mit einer Werkzeugantriebsbefestigung 6 ausgestattet, mit der zum Beispiel ein Mixstab 7 als Werkzeugantrieb befestigt werden kann. Eine Werkzeugantriebskupplung 8 des Deckels 2 wirkt mit einer Werkzeugkupplung (nicht dargestellt) des Werkzeugantriebs 7 in der Weise zusammen, dass eine Drehbewegung der Werkzeugkupplung auf die Werkzeugantriebskupplung 8 des Deckels 2 übertragen wird. Dazu können Werkzeugkupplung auf die Werkzeugantriebskupplung 8 drehfest miteinander verbunden werden.

Außerdem ist in dem Gefäß 3 eine Würfelschneideinheit als Bearbeitungswerkzeug 26 vorgesehen, das an dem Deckel 2 mittels eines weiteren Bajonettverschlusses mit Teil 29 am Bearbeitungswerkzeug 26 und korrespondierendem Teil 30 am Deckel 2 lösbar befestigt und über eine in Fig. 4 sichtbare Werkzeugkupplung 27 des Deckels 2 angetrieben wird. Durch die Einfüllöffnung 5 in das Küchengerät 1 eingeführte Lebensmittel werden durch das Bearbeitungswerkzeug in Würfel geschnitten und fallen anschließend zum Boden des Gefäßes 3.

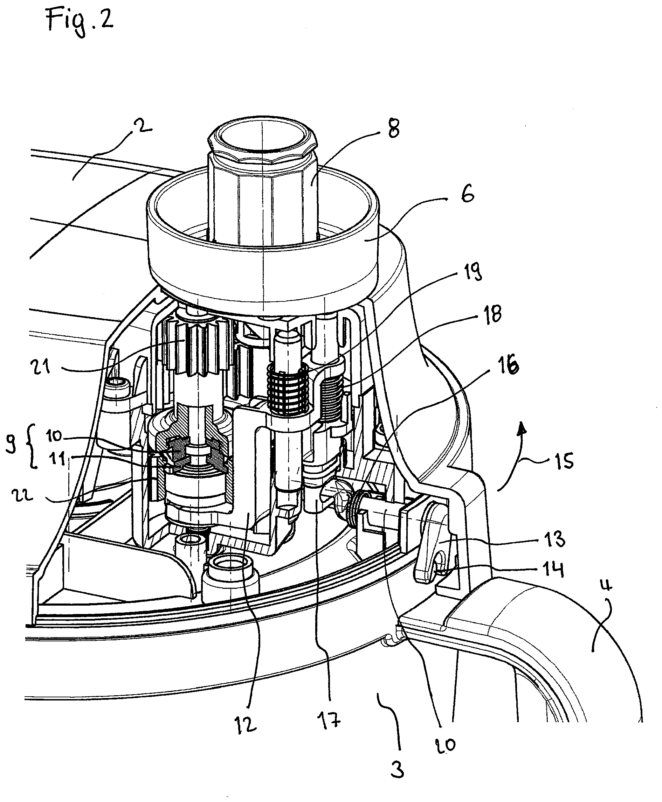

In der Figur 2 sind die wichtigsten Komponenten des Deckels 2 im Detail dargestellt. Die lösbare Sicherheitskupplung 9 des Deckels weist eine obere Kupplung 10 und eine untere Gegenkupplung 11 auf, wobei Kupplung 10 und Gegenkupplung 11 als Zahnkupplungen ausgeführt sind. In dem in der Figur dargestellten geschlossenen Zustand der Sicherheitskupplung 9 greifen die Zähne der Kupplung 10 und der Gegenkupplung 11 formschlüssig ineinander. Durch Bewegen eines Kupplungsschaltarms 12 nach unten kann die untere Gegenkupplung 11 von der oberen Kupplung 10 getrennt werden. Weiterhin ist ein als Hebel ausgeführter Kupplungsschalter 13 dargestellt, der mit einem zylindrischen, an der oberen Außenwand des Gefäßes angebrachten Betätigungselement 14 zusammenwirken kann. Die Figur zeigt den Kupplungsschalter 13 in seiner "Geschlossen"-Stellung. Dazu wurde der Deckel 2 in Befestigungsrichtung 15 an dem Gefäß 3 mittels Schraub- oder Bajonettverschluss befestigt, sodass das Betätigungselement 14 in eine U-förmige Aussparung des Kupplungsschalters 13 eingreift und diesen im Uhrzeigersinn von einer "Gelöst"- in die dargestellte "Geschlossen"-Stellung bewegt. Durch Drehen des Deckels 2 in die der Befestigungsrichtung 15 entgegengesetzte Öffnungsrichtung kann der Kupplungsschalter 13 von der "Geschlossen"-Stellung in die "Gelöst"-Stellung bewegt werden. Weiterhin sorgt eine Schenkelfeder als Kupplungsschalterrückstellelement 16 dafür, dass der Kupplungsschalter 13 bei Nichtbetätigung in der "Gelöst"-Stellung verbleibt, in der sich die Sicherheitskupplung 9 in ihrem gelösten Zustand befindet.

Im Folgenden werden weitere Komponenten des Deckels 2 und das Zusammenwirken der Komponenten im Einzelnen beschrieben. Die Sicherheitskupplung 9 wird im Wesentlichen durch den Kupplungsschalter 13 mit seinem Kupplungsschalterrückstellelement 16, einer Betätigungsstange 17 mit einer Vorspannfeder 18 und dem Kupplungsschaltarm 12, der außerdem eine Kupplungsabschaltfeder 19 aufweist, zwischen dem geschlossenen Zustand und dem gelösten Zustand hin- und herbewegt.

Der als gabelförmiger Hebel ausgebildete Kupplungsschalter 13 wird durch die Schenkelfeder 16 in seine Ausgangsposition, also die "Gelöst"-Stellung, die der gelösten Sicherheitskupplung entspricht, vorgespannt. Wenn nun der Deckel 2 durch Drehen in Befestigungsrichtung 15, d.h. in der Figur entgegen des Urzeigersinns, relativ zum Gefäß 3 an diesem befestigt wird, greift das Betätigungselement 14, in die U-förmige Aussparung des Kupplungsschalter 13 und dreht diesen im Uhrzeigersinn in die "Geschlossen"-Stellung. Dadurch wird eine Hebelwelle 20 des Kupplungsschalters 13 in Rotation versetzt und verschiebt die Betätigungsstange 17. Die Betätigungsstange 17 wirkt auf eine Vorspannfeder 18, wobei das Verschieben der Betätigungsstange 17 die Vorspannfeder 18 komprimiert. Die Vorspannfeder 18 wirkt ihrerseits auf den Kupplungsschaltarm 12, der außerdem mit der Kraft einer Kupplungsabschaltfeder 19 beaufschlagt ist. In dem durch die Betätigungsstange 17 komprimierten Zustand der Vorspannfeder 18 ist deren Kraft jedoch größer als die Kraft der Kupplungsabschaltfeder 19, sodass die Kraft der Kupplungsabschaltfeder 19 durch die Kraft der Vorspannfeder 18 überwunden und dadurch der Kupplungsschaltarm 12 die Sicherheitskupplung 9 in den geschlossenen Zustand bringt.

In diesem Zustand greifen Zähne der oberen Kupplung 10 der Sicherheitskupplung in Zähne der unteren Gegenkupplung 11, soweit Kupplung 10 und Gegenkupplung 11 geeignet zueinander stehen. Falls die Zähne der Kupplung 10 und der Gegenkupplung 11 nicht geeignet zueinander stehen sollten, um ineinander zu greifen, sondern stattdessen lediglich aufeinander sitzen, gelangen sie spätestens durch eine erste Bewegung der Kupplung 10 relativ zur Gegenkupplung 11 in eine geeignete Stellung um dann ineinander zu gleiten.

Die Kupplung 10 der Sicherheitskupplung 9 ist über ein Getriebe 21 mit einer Antriebswelle verbunden, an deren Ende die Werkzeugantriebskupplung 8 angebracht ist.

Dadurch, dass die Werkzeugantriebskupplung 8 und damit die Antriebswelle durch den Werkzeugantrieb 7 in Rotation versetzt werden, wird auch die Kupplung 10 der Sicherheitskupplung 9 in Rotation versetzt und diese wiederum überträgt die Rotation auf die Gegenkupplung 11. Die Gegenkupplung 11 ist ihrerseits über ein weiteres Getriebe 22 mit einer Abtriebswelle verbunden, die über die Werkzeugkupplung 27 das an dem Deckel 2 angebrachte und in dem Gefäß 3 angeordnete Bearbeitungswerkzeug 26 antreibt.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

### Bezugszeichenliste

- 1: Küchengerät
- 2: Deckel
- 3: Gefäß
- 4: Griff
- 5: Einfüllöffnung
- 6: Werkzeugantriebsbefestigung
- 7: Mixstab
- 8: Werkzeugantriebskupplung
- 9: Sicherheitskupplung
- 10: (obere) Kupplung
- 11: Gegenkupplung
- 12: Kupplungsschaltarm
- 13: Kupplungsschalter
- 14: Betätigungselement
- 15: Befestigungsrichtung
- 16: Kupplungsschalterrückstellelement
- 17: Betätigungsstange
- 18: Vorspannfeder
- 19: Kupplungsabschaltfeder
- 20: Hebelwelle
- 21: Getriebe
- 22: Getriebe
- 23: Am Deckel 2 befindlicher Teil des Bajonettverschlusses
- 24: Am Gefäß 3 befindlicher Teil des Bajonettverschlusses
- 25: Einfüllöffnungsdeckel
- 26: Bearbeitungswerkzeug
- 27: Werkzeugkupplung
- 28: Werkzeuggegenkupplung
- 29: Am Bearbeitungswerkzeug 26 befindlicher Teil des weiteren Bajonettverschlusses
- 30: Am Deckel 2 befindlicher Teil des weiteren Bajonettverschlusses

## Patentansprüche

1. Deckel (2), der an ein Gefäß (3) für die Bearbeitung eines in dem Gefäß (3) vorliegenden Lebensmittels lösbar anbringbar ist und der die Bewegung eines Werkzeugantriebs (7) auf ein Bearbeitungswerkzeug (26) für die Bearbeitung des Lebensmittels in dem Gefäß (3) übertragen kann, **dadurch gekennzeichnet, dass** der Deckel (2) eine lösbare Sicherheitskupplung (9) aufweist, um die Bewegung der Werkzeugantriebs (7) auf das Bearbeitungswerkzeug (26) in geschlossenem Zustand zu übertragen und in gelöstem Zustand diese Übertragung zu unterbrechen, und
der Deckel (2) einen Kupplungsschalter (13) aufweist, der die Sicherheitskupplung (9) abhängig von der Verbindung zwischen dem Deckel (2) und dem Gefäß (3) schließen und lösen kann.

2. Deckel (2) nach Anspruch 1, **dadurch gekennzeichnet, dass** er ein Kupplungsschalterrückstellelement (16) aufweist, um den Kupplungsschalter (13) bei Nichtbetätigung in die Stellung vorzuspannen, in der die Sicherheitskupplung (9) sich in ihrem gelösten Zustand befindet.

3. Deckel (2) nach einem der vorangehenden Ansprüche, **dadurch gekennzeichnet, dass** der Deckel (2) Befestigungsmittel (23) aufweist, um den Deckel (2) an dem Gefäß (3) lösbar zu befestigen.

4. Deckel (2) nach einem der vorhergehenden Ansprüche, **dadurch gekennzeichnet, dass** der Deckel (2) eine Antriebskupplung (8) aufweist, um den Werkzeugantrieb (7) lösbar an den Deckel (2) anzukuppeln.

5. Deckel (2) nach einem der vorhergehenden Ansprüche, **dadurch gekennzeichnet, dass** der Deckel (2) eine Werkzeugkupplung (27) aufweist, um das Bearbeitungswerkzeug (26) lösbar an den Deckel (2) anzukuppeln.

6. Deckel (2) nach einem der vorhergehenden Ansprüche, **dadurch gekennzeichnet, dass** der Deckel ein Getriebe (21, 22) aufweist.

7. Deckel (2) nach einem der vorhergehenden Ansprüche, **dadurch gekennzeichnet, dass** die Sicherheitskupplung (9) formschlüssig ist.

8. Deckel (2) nach Anspruch 1, **dadurch gekennzeichnet, dass** er eine Einfüllöffnung (5) zum Einfüllen eines Lebensmittels in das Bearbeitungsgefäß (3) aufweist.

9. Küchengerät (1) umfassend einen Deckel (2) nach einem der vorhergehenden Ansprüche und ein Gefäß (3) für die Bearbeitung eines in dem Gefäß (3) vorliegenden Lebensmittels, an den der Deckel (2) lösbar angebracht werden kann.

## Claims

1. Cover (2) which can be releasably attached to a vessel (3) for processing a food item present in the vessel (3) and which can transmit the movement of a tool drive (7) onto a processing tool (26) for processing the food item in the vessel (3), **characterised in that** the cover (2) has a releasable safety coupling (9) in order to transmit the movement of the tool drive (7) onto the processing tool (26) in the closed state and in the detached state to interrupt this transmission, and the cover (2) has a coupling switch (13), which can close and release the safety coupling (9) as a function of the connection between the cover (2) and the vessel (3).

2. Cover (2) according to claim 1, **characterised in that** it has a coupling switch return element (16), in order, upon non-actuation, to pretension the coupling switch (13) in the position in which the safety coupling (9) is disposed in its released state.

3. Cover (2) according to one of the preceding claims, **characterised in that** the cover (2) has fastening means (23) for releasably fastening the cover (2) to the vessel (3).

4. Cover (2) according to one of the preceding claims, **characterised in that** the cover (2) has a drive coupling (8) for releasably coupling the tool drive (7) to the cover (2).

5. Cover (2) according to one of the preceding claims, **characterised in that** the cover (2) has a tool coupling (27) for releasably coupling the processing tool (26) to the cover (2).

6. Cover (2) according to one of the preceding claims, **characterised in that** the cover has a transmission (21, 22).

7. Cover (2) according to one of the preceding claims, **characterised in that** the safety coupling (9) is form-fit.

8. Cover (2) according to claim 1, **characterised in that** it has a filler opening (5) for filling a food item into the processing vessel (3).

9. Kitchenware (1) comprising a cover (2) according to one of the preceding claims and a vessel (3) for processing a food item present in the vessel (3), to which the cover (2) can be releasably attached.

## Revendications

1. Couvercle (2) qui peut être posé de manière amovible sur un récipient (3) pour la préparation d'un produit alimentaire présent dans le récipient (3) et qui peut transmettre le mouvement d'un entraînement d'outil (7) à un outil de préparation (26) pour la préparation du produit alimentaire dans le récipient (3), **caractérisé en ce que** le couvercle (2) présente un raccordement de sécurité (9) amovible, pour transmettre le mouvement de l'entraînement d'outil (7) à l'outil de préparation (26) dans l'état fermé et pour interrompre cette transmission dans l'état débloqué, et
le couvercle (2) présente un commutateur de raccordement (13) qui peut fermer et débloquer le raccordement de sécurité (9) en fonction de la liaison entre le couvercle (2) et le récipient (3).

2. Couvercle (2) selon la revendication 1, **caractérisé en ce qu'**il présente un élément de rappel de commutateur de raccordement (16) pour, lors du non-actionnement, pré-contraindre le commutateur de raccordement (13) dans la position dans laquelle le commutateur de sécurité (9) se trouve dans son état débloqué.

3. Couvercle (2) selon l'une des revendications précédentes, **caractérisé en ce que** le couvercle (2) présente des moyens de fixation (23) pour fixer le couvercle (2) sur le récipient (3) de manière amovible.

4. Couvercle (2) selon l'une des revendications précédentes, **caractérisé en ce que** le couvercle (2) présente un raccordement d'entraînement (8) pour coupler l'entraînement d'outil (7) au couvercle (2) de manière amovible.

5. Couvercle (2) selon l'une des revendications précédentes, **caractérisé en ce que** le couvercle (2) présente un raccordement d'outil (27) pour coupler l'outil de préparation (26) au couvercle (2) de manière amovible.

6. Couvercle (2) selon l'une des revendications précédentes, **caractérisé en ce que** le couvercle présente un engrenage (21, 22).

7. Couvercle (2) selon l'une des revendications précédentes, **caractérisé en ce que** le raccordement de sécurité (9) est à complémentarité de forme.

8. Couvercle (2) selon la revendication 1, **caractérisé en ce qu'**il présente une ouverture de versement (5) pour verser un produit alimentaire dans le récipient (3) de préparation.

9. Appareil culinaire (1) comprenant un couvercle (2) selon l'une des revendications précédentes et un récipient (3) pour préparer un produit alimentaire se trouvant dans le récipient (3), sur lequel le couvercle (2) peut être posé de manière amovible.
